# EUROPEAN PATENT SPECIFICATION

(11) **EP 1 155 946 B1**
(45) Date of publication and mention of the grant of the patent: **27.04.2005**
(21) Application number: 01201424.7
(22) Date of filing: 19.04.2001
(51) Int. Cl.: B62H 1/02

(54) **Bearing device**
Vorrichtung zur Lagerung
Dispositif de palier

(30) Priority: 05.05.2000 SE 0001643
(43) Date of publication of application: 21.11.2001
(73) Proprietor: Skeppshultcykeln Albert Samuelsson & Co AB, 333 93 Skeppshult (SE)
(72) Inventor: Andersson, Ove, 333 33 Smalandsstenar (SE)
(74) Representative: Wallengren, Yngvar

(56) References cited:
- SE-B- 439 141

## Description

### TECHNICAL FIELD

The present invention relates, as in the preamble of claim 1, to a bearing device for a pivotal support leg included in a cycle support, comprising a bearing sleeve which is secured in the cycle and which, at opposing end portions, accommodates an outer and an inner bearing member, the bearing members pivotally accommodating an upper portion of the support leg.

### BACKGROUND ART

SE-B-439 141 discloses a bearing device of the type mentioned by way of introduction. In the design and construction according to this published application, the bearing sleeve is cylindrical in configuration but is pressed in its inner end so that the cross section there will be constant and rectangular, preferably square. In this inner, rectangular end portion of the bearing sleeve, there is placed a bearing member of corresponding rectangular cross section. In order to prevent this bearing member from being displaced in the longitudinal direction of the bearing sleeve out from the portion having rectangular cross section, the bearing sleeve has, in its inner end edge, punched flaps which are bent inwards over the end surface of the bearding member so that the bearing member will thereby be provided with heels against which it may abut.

In the opposing end of the bearing sleeve, the cross section is, as was mentioned above, circular-cylindrical and the bearing members placed there is of corresponding cylindrical cross section. This end of the bearing sleeve is also provided with punched and inwardly bent flaps which prevent the outer bearing member from being pressed out of the bearing sleeve because of the spring pretension which prevails between the two bearing members.

Granted, the above-outlined design and construction functions satisfactorily in the short term, but is complex and expensive in manufacture, in that many working operations are included in its production.

A further problem inherent in the above-outlined design and construction resides in the fact that water with dirt, salt and similar contaminants has as good as free access into the bearing sleeve, so that the service life of the bearing device may be expected to be short. The reason for this is that, above all, the inner bearing member cannot have any particularly tight fit in the bearing sleeve if assembly is to be able to put into effect without major inconvenience. Correspondingly, the fits between the bearing sleeve and the outer bearing member must also be relatively loose.

### PROBLEM STRUCTURE

The present invention has for its object to improve the bearing device intimated by way of introduction such that problems inherent in prior art solutions are obviated. In particular, the present invention has for its object to design the bearing device such that considerably improved protection against the penetration of water and dirt is obtained, at the same time as the inner bearing member lies sealingly and steadily in position in the bearing sleeve. Finally, the present invention has for its object further to simplify the design and construction of the bearing device so that costs savings may be made.

### SOLUTION

The objects forming the basis of the present invention will be attained if the bearing device intimated by way of introduction is characterised in that the bearing sleeve is of rectangular cross section, that in the region of its inner end portion, it has a portion which is in the form of a truncated pyramid which tapers in a direction away from the outer end portion of the bearing sleeve, that the inner bearing member is of an outer configuration which is substantially complementary to the pyramid-shaped portion, and that the inner bearing member, at least for the greater part, is accommodated therein.

These design and construction features afford the major advantage that the inner bearing member, in a wedge union, is located sealingly impressed in the similarly wedge-shaped space which is formed in the inner end of the bearing sleeve.

### BRIEF DESCRIPTION OF THE ACCOMPANYING DRAWINGS

The present invention will now be described in greater detail hereinbelow, with particular reference to the accompanying Drawings. In the accompanying Drawings:
- Fig. 1: shows from above a part of a cycle with the cycle support according to the present invention mounted in place;
- Fig. 2: shows a bearing device according to the present invention, partly cut away; and
- Fig. 3: is a longitudinal section and transverse section through the bearing sleeve included in the device according to the present invention.

### DESCRIPTION OF PREFERRED EMBODIMENT

The terms "inner" and "outer" will be employed below in the sense that "inner" relates to a part of any component included in the device according to the present invention located distally in relation to the user when the device according to the present invention and the user are in normal positions of use. Fully analogously, the term "outer" relates to a part of any component included in the device according to the present invention which is turned to face towards the user.

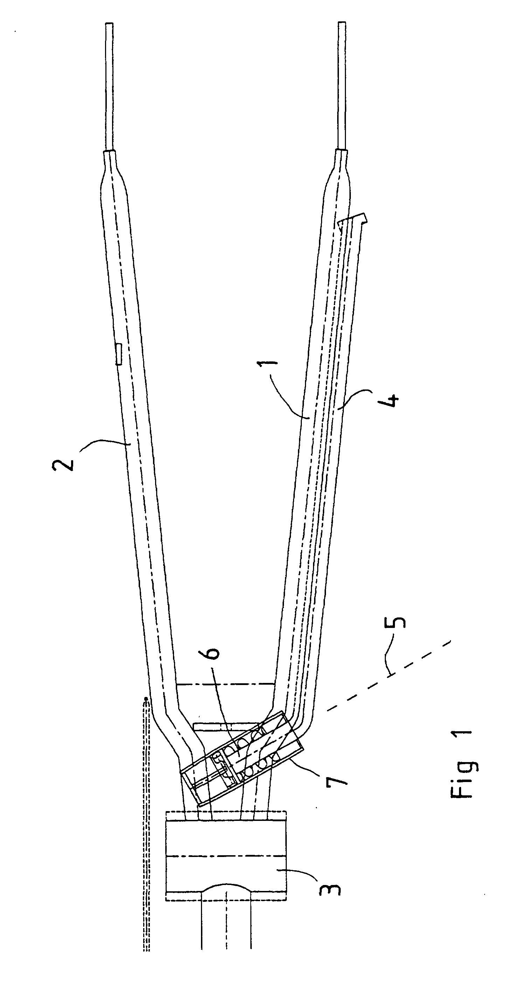

In Fig. 1, reference numeral 1 relates to the left-hand fork leg in the rear fork of a cycle, while reference numeral 2 relates to the right-hand fork leg. Reference numeral 3 relates to the sleeve in which the crank mechanism of the cycle is journalled. Both of the fork legs 1 and 2 are secured with their front ends in the sleeve 3, preferably by means of welding or soldering.

The cycle support according to the present invention includes a pivotal support leg 4 which is shown in its upwardly pivoted position where it largely extends along the left-hand fork leg 1. The support leg 4 is pivotal about an axis which is illustrated by a broken line 5. The support leg 4 is pivotal from the raised position illustrated in Fig. 1 to a lowered, active support position by a pivoting of the support leg of the order of magnitude of 100-130° in a clockwise direction about the broken line 5.

The support leg 4 has an upper bearing portion 6 which is bent in relation to the main section of the support leg and which is pivotally journalled in a bearing sleeve 7 which is secured on the underside of the two fork legs 1 and 2, preferably by welding.

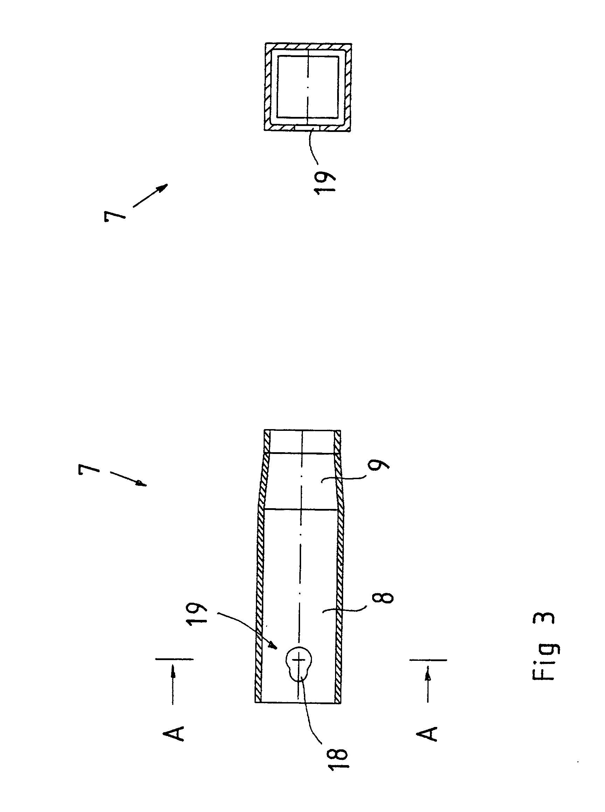

As will be apparent from Fig. 3, the bearing sleeve 7 is of rectangular, preferably square, cross section. The bearing sleeve has a uniformly thick, outer portion 8 which, in Fig. 1, is the left-hand portion of the bearing sleeve, and a tapering, inner portion 9 which is in the form of an acute, truncated, four-sided pyramid.

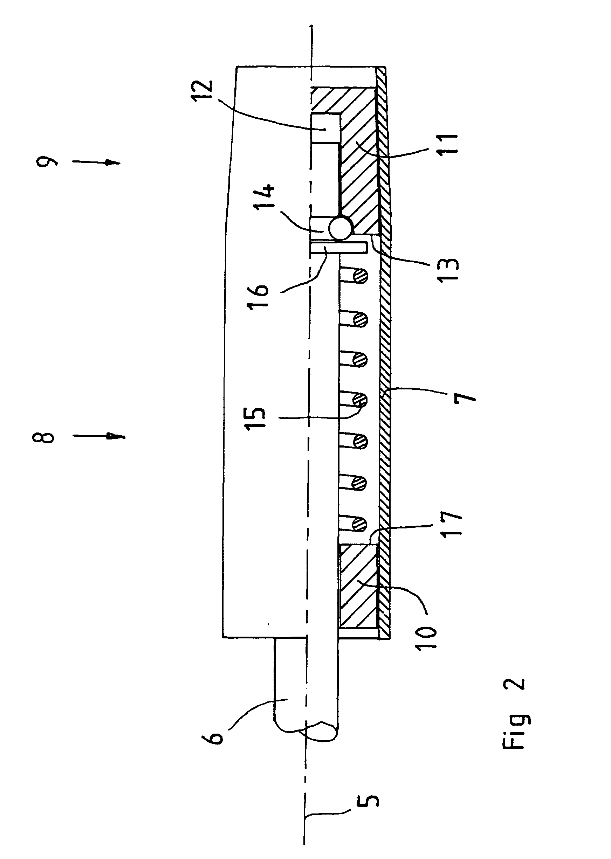

It will be apparent from Fig. 2 that, in the outer end of the bearing sleeve 7, i.e. that end which faces towards the support leg 4, there is provided an outer bearing member 10 through which the bearing portion 6 of the support leg pivotally extends. At the inner end of the bearing sleeve 7, i.e. the right-hand end in Fig. 1, there is provided an inner bearing member 11 with a bore 12 which is closed at one end and in which the bearing portion 6 of the support leg is pivotally accommodated.

In a conventional manner, the inner bearing member 11 has, in its end surface facing towards the outer bearing member 10, a cam surface 13 which has four recesses in it for defining the two pivotal positions which the support leg 4 may assume as fixed positions. Along the cam surface, a pin 14 which is transverse in relation to the bearing portion 6 of the support leg 4 is disposed to extend through a diametric bore in the bearing portion 6. This thus implies that the pin 14 accompanies the support leg in is pivotal movements, at the same time as the pin moves along the cam surface 13. The pin 14 is urged against the cam surface in the axial direction of the bearing portion 6 under the action of a helical spring 15 which, via a washer 16, abuts against the pin 14. The opposite end of the spring 15 abuts against the inside 17 of the outer bearing member 10. When the outer bearing member 10 is fixed in the longitudinal direction of the bearing sleeve 7, the above-described arrangement implies that the pin 14 is spring-biased against the cam surface 13 on the inner bearing member which in turn is spring-biased in an inward direction in the tapering portion 9 of the bearing sleeve 7.

The inner bearing sleeve is of rectangular cross section but tapers in a direction to the right in Fig. 2 in the same manner as the tapering portion 9 of the bearing sleeve 7. This entails that the inner bearing member 11 is fixed in the bearing sleeve by means of a wedge union which, on the one hand, realises an extremely good positional fixing of the inner bearing member and, on the other hand, an extremely good sealing between the bearing member and the tapering portion 9 of the bearing sleeve. The outer configuration of the inner bearing sleeve is substantially complementary to the inner configuration of the tapering portion 9 of the bearing sleeve.

The outer bearing member 10 is of outer, rectangular configuration which fits with snug fit internally in the uniformly thick portion 8 of the bearing sleeve. A good seal will also be obtained here against the inside of the bearing sleeve. For axial fixing of the outer bearing member 10 in the bearing sleeve 7, use is made of a union with a locking element which, with a head, is located in a bore in the outer bearing member 10, and a narrow shaft which is located in the narrower portion 18 of the keyhole-shaped aperture 19 in the bearing sleeve 7 (Fig. 3).

Assembly of the bearing device according to the present invention proceeds such that the inner bearing member 11 is placed loosely interiorly in the bearing sleeve 7. Thereafter, the bearing portion 6 of the support leg 4 with the pin 14, the washer 16 and the helical spring 15, as well as the outer bearing member 10, outside are moved into the bearing sleeve. The outer bearing member 10 is subjected to an axial force so that the spring 15 is compressed, whereafter the locking element is moved with its head through the widest part of the keyhole-shaped aperture and into the corresponding bore in the outer bearing member 10, whereafter the bearing member is released so that it is displaced outwards under the action of the spring 15 a short distance until the narrower part of its locking element is located in the narrow portion of the keyhole-shaped aperture 19, while the head of the locking element is located in the bore of the outer bearing member and abuts against the inside of the bearing sleeve immediately about the narrower portion 18 of the keyhole-shaped aperture. Withdrawal of the locking element in this state is impossible.

The outer bearing member 10 may, in order to improve the seal against the inside of the bearing sleeve 7, be provided with circumferential, relatively thin grooves which are dimensioned in such a manner that, if such were to prove necessary, they can absorb tolerances and possibly be deformed when the outer bearing member 10 is axially pressed into the bearing sleeve 7.

## Claims

1. A bearing device for a pivotal support leg (4) included in a cycle support, comprising a bearing sleeve (7) which is adapted to be secured to the cycle and which, at opposing end portions, accommodates an outer and an inner bearing member (10, 11, respectively), the bearing members being adapted to pivotally accommodate an upper portion (6) of the support leg (4), **characterised in that** the bearing sleeve (7) is of rectangular cross section; that in the region of its inner end portion, it has a portion (9) which is in the form of a truncated pyramid which tapers in a direction away from the outer end portion of the bearing sleeve; that the inner bearing member (11) is of an outer configuration which is substantially complementary to the pyramid-shaped portion (9); and that the inner bearing member (11), at least for the greater part, is accommodated therein.

2. The bearing device as claimed in Claim 1, **characterised in that** the inner bearing member (11) is spring-biased into engagement with the pyramid-shaped portion of the bearing sleeve (7).

3. The bearing device as claimed in Claim 1 or 2, **characterised in that** the outer bearing member (10) is externally of rectangular configuration which is substantially complementary to the inner configuration of the bearing sleeve (7) at the outer end region (8).

4. The bearing device as claimed in any of Claims 1 to 3, **characterised in that** the outer bearing member (10) is axially positionally fixed in the bearing sleeve (7) via a locking element which extends through an aperture (19) in the wall of the bearing sleeve (7) and into a corresponding recess in the outer bearing member (10).

## Patentansprüche

1. Vorrichtung zur Lagerung eines schwenkbaren Stützbeins (4), beinhaltet in einer Radstütze, welches eine Lagerbuchse (7) beinhaltet, die angepasst ist, um an dem Rad gesichert zu werden, und die an gegenüberliegenden Endbereichen ein äußeres und ein inneres Lagerelement (10, 11 entsprechend) aufnimmt, wobei die Lagerelemente angepasst sind, um schwenkbar einen oberen Bereich (6) des Stützbeins (4) aufzunehmen, **dadurch gekennzeichnet, dass** die Lagerbuchse (7) einen rechteckigen Querschnitt aufweist; dass diese in dem Bereich ihres inneren Endbereichs einen Bereich (9) aufweist, welcher die Form einer abgestumpften Pyramide aufweist, die sich in eine Richtung weg von dem äußeren Endbereich der Lagerbuchse verjüngt; dass das innere Lagerelement (11) eine äußere Form aufweist, die im wesentlichen komplementär zu dem pyramidenförmigen Bereich (9) ist; und dass das innere Lagerelement (11) wenigstens zum größten Teil darin aufgenommen ist.

2. Vorrichtung zur Lagerung gemäß Anspruch 1, **dadurch gekennzeichnet, dass** das innere Lagerelement (11) mit Federvorspannung in Eingriff mit dem pyramidenförmigen Bereich der Lagerbuchse (7) ist.

3. Vorrichtung zur Lagerung gemäß Anspruch 1 oder 2, **dadurch gekennzeichnet, dass** das äußere Lagerelement (10) außen von rechteckiger Form ist, welche im wesentlichen komplementär zu der inneren Form der Lagerbuchse (7) an dem äußeren Endbereich (8) ist.

4. Vorrichtung zur Lagerung gemäß irgend einem der Ansprüche 1 bis 3, **dadurch gekennzeichnet, dass** das äußere Lagerelement (10) positionell axial in der Lagerbuchse (7) befestigt ist mittels einem Feststellelement, welches sich durch eine Öffnung (19) in der Wand der Lagerbuchse (7) in eine entsprechende Aussparung in dem äußeren Lagerelement (10) erstreckt.

## Revendications

1. Dispositif de palier pour une jambe de support pivotante (4) inclue dans un support de cycle, comprenant un manchon de palier (7) qui est adapté pour être fixé au cycle et qui, au niveau de parties d'extrémité opposées, loge des éléments de palier interne et externe (10, 11 respectivement), les éléments de palier étant adaptés pour loger de façon pivotante une partie supérieure (6) de la jambe de support (4), **caractérisé en ce que** le manchon de palier (7) a une section transversale rectangulaire ; **en ce que** dans la zone de sa partie d'extrémité interne, il possède une partie (9) qui est de la forme d'une pyramide tronquée qui s'effile dans une direction s'écartant de la partie d'extrémité externe du manchon de palier ; **en ce que** l'élément de palier interne (11) a une configuration externe qui est sensiblement complémentaire de la partie en forme de pyramide (9) ; et **en ce que** l'élément de palier interne (11), du moins pour la plus grande partie, est logé à l'intérieur.

2. Dispositif de palier selon la revendication 1, **caractérisé en ce que** l'élément de palier interne (11) est incliné par ressort en prise avec la partie en forme de pyramide du manchon de palier (7).

3. Dispositif de palier selon la revendication 1 ou 2, **caractérisé en ce que** l'élément de palier externe (10) a une configuration externe rectangulaire qui est sensiblement complémentaire de la configuration interne du manchon de palier (7) au niveau de la zone d'extrémité externe (8).

4. Dispositif de palier selon l'une quelconque des revendications 1 à 3, **caractérisé en ce que** l'élément de palier externe (10) est axialement fixé en position dans le manchon de palier (7) par le biais d'un élément de blocage qui s'étend à travers une ouverture (19) dans la paroi du manchon de palier (7) et dans un logement correspondant dans l'élément de palier externe (10).
